# EUROPEAN PATENT APPLICATION

(11) **EP 4 697 539 A1**
(43) Date of publication of application: **18.02.2026**
(21) Application number: 23933031.9
(22) Date of filing: 13.04.2023
(51) Int. Cl.: H02J 3/24

(54) **ANTI-FLICKER DEVICE AND ANTI-FLICKER CONTROL METHOD**

(71) Applicant: TMEIC Corporation, Tokyo 104-0031 (JP); MITSUBISHI ELECTRIC CORPORATION, Chiyoda-ku Tokyo 100-8310 (JP)
(72) Inventor: ONOSATO, Kohei, Tokyo 104-0031 (JP); MORISHIMA, Naoki, Tokyo 104-0031 (JP); TAKAHASHI, Tatsuya, Tokyo 100-8310 (JP); TANI, Naoki, Tokyo 100-8310 (JP)
(74) Representative: Winter, Brandl - Partnerschaft mbB
(86) International application number: PCT/JP2023/015063
(87) International publication number: WO 2024/214255

(57) **Abstract**

A flicker suppression device (100) is connected to a power system with a power conditioner (30) connected thereto for system interconnection of a distributed power source (40). The flicker suppression device (100) comprises a power converter (110) to perform power conversion between a power storage element (120) and the power system, a voltage detector (134) to detect an AC voltage on the power system, and a control device (130) to control an output of the power converter (110), based on the detected AC voltage. The control device (130) operates in response to an increase in the effective value of the AC voltage to control the power converter (110) to convert a DC power output from the power storage element (120) to an AC power and output the AC power to the power system, and the control device (130) operates in response to a decrease in the effective value of the AC voltage to control the power converter (110) to convert an AC power received from the power system to a DC power and output the DC power to the power storage element (120).

## Description

### TECHNICAL FIELD

The present disclosure relates to a flicker suppression device and a flicker suppression control method.

### BACKGROUND ART

In recent years, as renewable energy is increasingly introduced, a large number of distributed power sources represented by photovoltaic power generators have been connected to power systems. Furthermore, to a power conditioner (PCS) for system interconnection of a distributed power source, a new active method (a frequency feedback method with step injection) defined in JEM 1498 has been widely applied as a function of detecting an isolated operation state. In the new active method, whether a power system is in the isolated operation state is determined by monitoring a change in the system frequency when reactive power is injected from the PCS into the power system.

It is known that when a large number of PCSs with the new active method applied thereto are connected to a power system, a phenomenon occurs in which the power system has voltage fluctuation (or flickers) with a frequency of about 6 to 7 Hz (see PTL 1). For the purpose of cancelling the reactive power injected from the PCS, PTL 1 describes injecting such a reactive power that compensates for a change in the system frequency to attempt to suppress the thus caused flicker.

### CITATION LIST

### PATENT LITERATURE

PTL 1: WO2022/163697

### SUMMARY OF INVENTION

### TECHNICAL PROBLEM

In a power system, in order to ensure an amount of power generated by a distributed power source even when it receives a small amount of insolation, a configuration may be employed in which the distributed power source has a larger rated capacity than a PCS. In this configuration, the PCS outputs an active current controlled to be smaller as AC voltage's effective value increases and larger as the value decreases so that the PCS outputs active power falling within a range based on the PCS's rated capacity.

As the active current varies in magnitude depending on the magnitude of the effective value of the AC voltage, transmitting active power from the PCS to the power system requires varying the AC voltage's phase difference. The phase variation of the AC voltage is equivalent to changing the system frequency. In response to a change in the system frequency, the PCS injects reactive power in a direction to promote the change (an increase or a decrease) of the frequency by the above-described function of detecting the isolated operation state. The injection of reactive power for detection of isolated operation will result in expansion of flicker.

The flicker suppression device described in PTL 1 injects reactive power into a power system so as to compensate for a change in a system frequency. However, there is a concern that when the AC voltage's phase variation attributed to active power control performed for the PCS has some magnitude (or the frequency has a change in an amount having some magnitude), this would result in flicker having an increased degree of instability, and it is difficult to obtain a sufficient suppression effect even by injection of reactive power by the flicker suppression device.

The present disclosure has been made to solve such a problem, and an object of the present disclosure is to suppress flicker attributed to active power control performed for a power conditioner in a power system with the power conditioner connected thereto for system interconnection of a distributed power source.

### SOLUTION TO PROBLEM

According to an aspect of the present disclosure, there is provided a flicker suppression device for a power system with a power conditioner connected thereto for system interconnection of a distributed power source. The flicker suppression device comprises a power converter to perform power conversion between a power storage element and the power system, a voltage detector to detect an AC voltage on the power system, and a control device to control an output of the power converter, based on the detected AC voltage. The control device operates in response to an increase in an effective value of the AC voltage to control the power converter to convert a DC power output from the power storage element to an AC power and output the AC power to the power system, and the control device operates in response to a decrease in the effective value of the AC voltage to control the power converter to convert an AC power received from the power system to a DC power and output the DC power to the power storage element.

According to another aspect of the present disclosure, there is provided a flicker suppression control method for a power system with a power conditioner connected thereto for system interconnection of a distributed power source. The flicker suppression control method comprises the steps of: detecting an AC voltage on the power system; and controlling based on the detected AC voltage an output of a power converter that performs power conversion between a power storage element and the power system. In the controlling, the power converter is controlled in response to an increase in an effective value of the AC voltage to convert a DC power output from the power storage element to an AC power and output the AC power to the power system, and the power converter is controlled in response to a decrease in the effective value of the AC voltage to convert an AC power received from the power system to a DC power and output the DC power to the power storage element.

### ADVANTAGEOUS EFFECTS OF INVENTION

According to the present disclosure, a power system with a power conditioner connected thereto for system interconnection of a distributed power source can be prevented from having flicker attributed to active power control performed for the power conditioner.

### BRIEF DESCRIPTION OF DRAWINGS

Fig. 1 is a schematic block diagram for illustrating a configuration of a power system with a flicker suppression device connected thereto according to a first embodiment.
Fig. 2 is a block diagram showing a configuration of a control device for a PCS.
Fig. 3 is a conceptual diagram for illustrating a characteristic of reactive power output by the PCS.
Fig. 4 shows a hardware configuration example of a control device of the flicker suppression device.
Fig. 5 is a block diagram showing a functional configuration of the control device.
Fig. 6 is a conceptual diagram for illustrating a first example of a control operation in a reverse active power injection control unit.
Fig. 7 is a conceptual diagram for illustrating a second example of the control operation in the reverse active power injection control unit.
Fig. 8 is a flowchart of a flicker suppression process performed by the flicker suppression device according to the first embodiment.
Fig. 9 is a block diagram showing a configuration of a flicker suppression device according to a second embodiment.
Fig. 10 is a conceptual diagram for illustrating a first example of a control operation in a reverse active power injection control unit.
Fig. 11 is a conceptual diagram for illustrating a second example of the control operation in the reverse active power injection control unit.
Fig. 12 is a block diagram showing a configuration of a flicker suppression device according to a third embodiment.
Fig. 13 is a conceptual diagram for illustrating a first example of a control operation in a reverse reactive power injection control unit.
Fig. 14 is a conceptual diagram for illustrating a second example of the control operation in the reverse reactive power injection control unit.
Fig. 15 is a flowchart of a flicker suppression process performed by the flicker suppression device according to the third embodiment.

### DESCRIPTION OF EMBODIMENTS

Hereinafter, embodiments of the present disclosure will be described in detail with reference to the drawings. In the following description, identical or corresponding components in the figures are identically denoted and will not be described repeatedly in principle.

### First Embodiment.

### <Configuration of Power System>

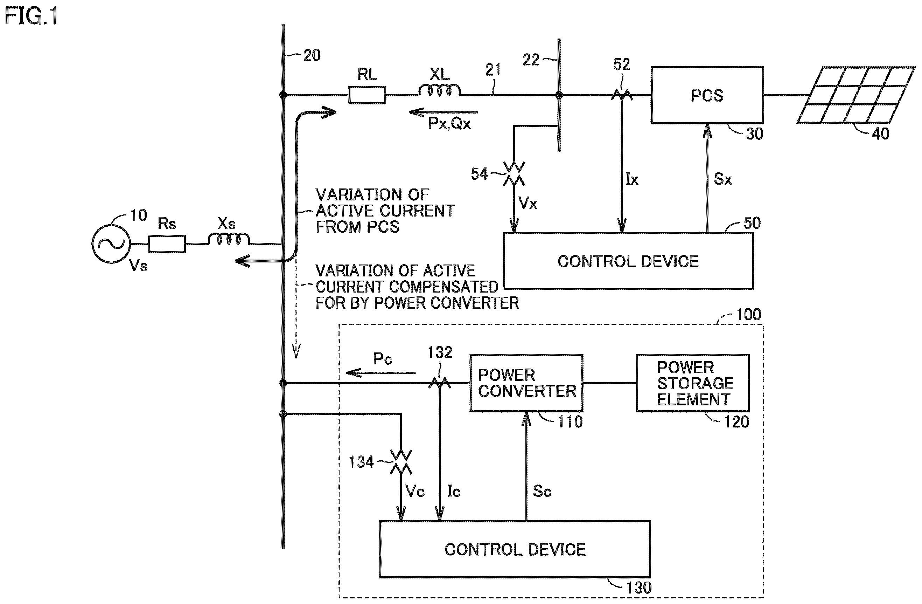

Fig. 1 is a schematic block diagram for illustrating a configuration of a power system with a flicker suppression device connected thereto according to a first embodiment.

As shown in Fig. 1, a flicker suppression device 100 according to the first embodiment is connected to a power system including a voltage source 10, a bus bar 20, and a bus bar 22. A PCS 30 is connected to bus bar 22 for system interconnection of a distributed power source 40 represented by a photovoltaic power generator. Bus bar 22 is connected to bus bar 20 through a power transmission line 21. Voltage source 10 is connected to bus bar 20. Voltage source 10 is for example a three-phase AC power source.

### (Configuration of PCS 30)

PCS 30 takes in an active power Px from distributed power source 40 and outputs active power Px to bus bar 22. Further, PCS 30 has a function of detecting an isolated operation state, and outputs a reactive power Qx to bus bar 22 for the detection function.

A current detector 52 detects a three-phase AC current Ix flowing between bus bar 22 and PCS 30, and outputs a signal indicating the detected value to a control device 50. A voltage detector 54 detects a three-phase AC voltage Vx on bus bar 22 and outputs a signal indicating the detected value to control device 50.

Control device 50 controls active power Px and reactive power Qx output from PCS 30 to bus bar 22 based on the signals received from current detector 52 and voltage detector 54.

In the present embodiment, a phase advance and delay of reactive power Qx (or a reactive current) output from PCS 30 conform to JEM 1498. Specifically, a direction in which electric power (or a current) flows from bus bar 22 to PCS 30 is defined as being "positive," and a reactive power by a current having a phase delayed in that direction by 90 degrees with respect to a voltage is defined as a "lagging (or phase-delayed) reactive power," and, on the contrary, a reactive power by a current having a phase advancing in the same direction by 90 degrees with respect to the voltage is defined as a "leading (or phase-advancing) reactive power". Further, in the present embodiment, a direction in which electric power (or a current) flows from the side of the system (or bus bars 20 and 22) to PCS 30 or flicker suppression device 100 (or power converter 110) is defined as "positive".

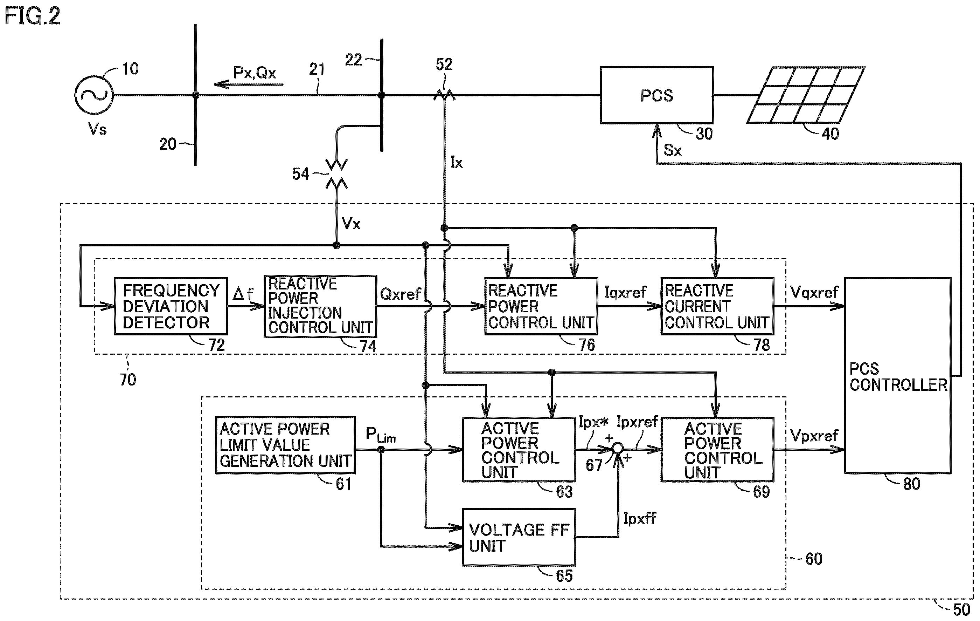

Fig. 2 is a block diagram showing a configuration of control device 50 for PCS 30. As illustrated in Fig. 2, control device 50 includes an active power controller 60 that controls active power Px output from PCS 30, a reactive power controller 70 that controls reactive power Qx output from PCS 30, and a PCS controller 80.

Active power controller 60, reactive power controller 70, and PCS controller 80 each have a function implemented by a processing circuit. The processing circuit may be dedicated hardware or may be a central processing unit (CPU) that executes a program stored in an internal memory of control device 50. When the processing circuit is dedicated hardware, the processing circuit is configured for example by an FPGA (a Field Programmable Gate Array), an ASIC (an Application Specific Integrated Circuit), a combination thereof, or the like.

Active power controller 60 includes an active power limit value generation unit 61, an active power control unit 63, a voltage feedforward (FF) unit 65, an adder 67, and an active current control unit 69.

Active power limit value generation unit 61 generates an upper limit value for active power Px that can be output by PCS 30, or an active power limit value PLim. Active power limit value PLim corresponds to an upper limit value for the active power that PCS 30 can output. Active power limit value PLim is set based on a rated capacity of PCS 30 or an external command.

In order to ensure an amount of power generated by distributed power source 40 even when it receives a small amount of insolation, a configuration may be employed in which distributed power source 40 has a rated capacity larger than that of PCS 30. This is referred to as overloading. In that case, in response to distributed power source 40 generating an amount of power exceeding the rated capacity of PCS 30, PCS 30 outputs active power Px limited to active power limit value PLim.

Active power control unit 63 generates an active current command value Ipx* for limiting active power Px that PCS 30 outputs to fall within a range following active power limit value PLim. Specifically, active power control unit 63 calculates active power Px that PCS 30 outputs from AC current Ix detected by current detector 52 and AC voltage Vx detected by voltage detector 54. Active power Px is given by VIcosϕ. Herein, V is a line voltage of AC voltage Vx, I is a line current of AC current Ix, ϕ is a phase difference between AC voltage Vx and AC current Ix, and cosϕ is a power factor.

Active power control unit 63 calculates a deviation ΔPx between active power limit value PLim and active power Px (i.e., PLim - Px). Active power control unit 63 generates active current command value Ipx* through feedback control applied to zero deviation ΔPx. That is, active power control unit 63 generates active current command value Ipx* for causing active power Px to follow active power limit value PLim. Active power control unit 63 includes a proportional-integral (PI) controller, a proportional-integral-derivative (PID) controller, and the like. Active current command value Ipx* corresponds to an amount of feedback control for implementing active power (or active current) control.

Voltage FF unit 65 generates an amount of feedforward control Ipxff in active power (or active current) control based on active power limit value PLim and AC voltage Vx detected by voltage detector 54. Specifically, voltage FF unit 65 calculates amount of feedforward control Ipxff by dividing active power limit value PLim by the line voltage of AC voltage Vx (i.e., Ipxff = PLim/V).

Amount of feedforward control Ipxff corresponds to an active current Ipx required to limit active power Px to a range following active power limit value PLim. In other words, amount of feedforward control Ipxff corresponds to an upper limit value for active current Ipx for preventing active power Px from exceeding active power limit value PLim. Therefore, as AC voltage Vx has an increasing effective value, amount of feedforward control Ipxff decreases. In contrast, as AC voltage Vx has a decreasing effective value, amount of feedforward control Ipxff increases.

Adder 67 adds active current command value Ipx* (or an amount of feedback control) and amount of feedforward control Ipxff together to generate a command value for active current Ipx output from PCS 30, or an active current command value Ipxref. This ensures stable control by feedback control and, in addition, can provide control with enhanced responsiveness to variation of AC voltage Vx.

Active current control unit 69 generates an active voltage command value Vpxref for causing active current Ipx to follow active current command value Ipxref. Specifically, active current control unit 69 calculates active current Ipx by subjecting AC current Ix detected by current detector 52 to three-phase/two-phase conversion in a positive phase coordinate system. Then, active current control unit 69 calculates a deviation ΔIpx between active current command value Ipxref and active current Ipx (i.e., Ipxref - Ipx). Active current control unit 69 generates active voltage command value Vpxref through feedback control applied to zero deviation ΔIpx. Active current control unit 69 is composed of a PI controller, a PID controller, and the like.

Reactive power controller 70 includes a frequency deviation detector 72, a reactive power injection control unit 74, a reactive power control unit 76, and a reactive current control unit 78.

Frequency deviation detector 72 detects from AC voltage Vx detected by voltage detector 54 the voltage's frequency or a system frequency f. Then, frequency deviation detector 72 uses the detected system frequency f to calculate an amount of change in frequency (hereinafter also referred to as a "frequency deviation") Δf indicating a change (an increase or a decrease) in system frequency f.

In the present embodiment, frequency deviation Δf is calculated such that frequency deviation Δf is positive in polarity (Δf > 0) when system frequency f increases, and frequency deviation Δf is negative in polarity (Δf < 0) when system frequency f decreases. Frequency deviation Δf can be calculated in a variety of methods described in PTL 1. That is, frequency deviation Δf can be calculated by any method including the definition for polarity (positive/negative) insofar as the method can represent an increase and a decrease in the system frequency.

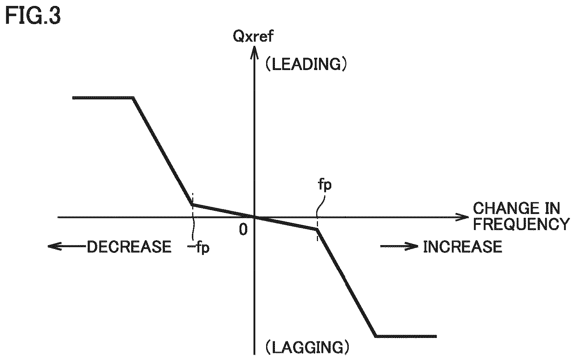

As described above, PCS 30 outputs reactive power Qx on bus bar 22 for implementing the function of detecting the isolated operation state. For example, reactive power Qx is output with a characteristic shown in Fig. 3 in accordance with a new active method (a frequency feedback method with step injection) as defined in JEM 1498.

In Fig. 3, the horizontal axis represents an amount of change in system frequency f, or frequency deviation Δf, in accordance with the same polarity as in the present embodiment, with a direction in which the frequency increases as a positive direction, and the vertical axis represents reactive power Qx with leading reactive power as a positive value and lagging reactive power as a negative value.

Reactive power injection control unit 74 sets a reactive power command value Qxref so as to promote a received frequency deviation Δf in accordance with the characteristic shown in Fig. 3. Specifically, in a configuration in which reactive power command value Qxref is set in accordance with a product of frequency deviation Δf and a proportional gain Kp, reactive power injection control unit 74 switches proportional gain Kp depending on the magnitude of frequency deviation Δf. For a region in which frequency deviation Δf has a small absolute value (equal to or smaller than a reference value fp), proportional gain Kp is set to a first gain. On the other hand, when frequency deviation Δf exceeds reference value fp and changes toward a frequency increasing side, proportional gain Kp is set to a second gain larger than the first gain so as to output a lagging reactive power (Qxref < 0) to further increase the system frequency. Similarly, when frequency deviation Δf exceeds a reference value - fp and changes toward a frequency decreasing side, proportional gain Kp is set to the second gain so as to output a leading reactive power (Qxref > 0) to further reduce the system frequency. In Fig. 3, it is possible to set the first gain to 0 to provide the region in which frequency deviation Δf has a small absolute value with a dead band with reactive power command value Qxref = 0.

Thus, when a change in system frequency f with frequency deviation Δf having an absolute value exceeding reference value fp is detected, PCS 30 injects reactive power Qx in a direction to promote the change of the frequency (an increase or a decrease). And when reactive power Qx in such a promoting direction is injected, and the frequency changes by a determined amount (an increase or a decrease) while the promotion is not prevented, power transmission to bus bar 22 with PCS 30 connected thereto has been stopped, and PCS 30 can detect an isolated operation state. When the isolated operation state is detected, PCS 30 operates to electrically disconnect bus bar 22 from distributed power source 40. A function of preventing the isolated operation is thus implemented.

Returning to Fig. 2, reactive power control unit 76 generates a reactive current command value Iqref for causing reactive power Qx that PCS 30 outputs to follow reactive power command value Qxref. Specifically, reactive power control unit 76 calculates reactive power Qx that PCS 30 outputs from AC current Ix detected by current detector 52 and AC voltage Vx detected by voltage detector 54. Reactive power Qx is given by - VIsinϕ.

Reactive power control unit 76 calculates a deviation ΔQx between reactive power command value Qxref and reactive power Qx (i.e., Qxref - Qx). Reactive power control unit 76 generates a command value for a reactive current Iqx output from PCS 30, or a reactive current command value Iqxref, through feedback control applied to zero deviation ΔQx. Reactive power control unit 76 is composed of a PI controller, a PID controller, and the like.

Reactive current control unit 78 generates a reactive voltage command value Vqxref for causing reactive current Iqx to follow reactive current command value Iqxref. Specifically, reactive current control unit 78 calculates reactive current Iqx by subjecting AC current Ix detected by current detector 52 to three-phase/two-phase conversion in the positive phase coordinate system. Then, reactive current control unit 78 calculates a deviation ΔIqx between reactive current command value Iqxref and reactive current Iqx (i.e., Iqxref - Iqx). Reactive current control unit 78 generates reactive voltage command value Vqxref through feedback control applied to zero deviation ΔIqx. Reactive current control unit 78 is composed of a PI controller, a PID controller, and the like.

PCS controller 80 generates a control command Sx for PCS 30 based on active voltage command value Vpxref received from active power controller 60 and reactive voltage command value Vqxref received from reactive power controller 70. Specifically, PCS controller 80 generates a three-phase voltage command value by subjecting active voltage command value Vpxref and reactive voltage command value Vqxref to two-phase/three-phase conversion in the positive phase coordinate system. And PCS controller 80 generates control command Sx as a PWM signal by subjecting the three-phase voltage command value to pulse width modulation. Control command Sx is typically a gate signal for controlling turning on and off each switching element included in PCS 30. Control command Sx is input to PCS 30.

### <Problem Caused by Active Power Control Performed for PCS 30>

As described above, PCS 30 outputs active power Px (active current Ipx) that is taken in from distributed power source 40 to bus bar 22 within a range following active power limit value PLim. When this is done, by a process performed by active power controller 60 in control device 50, active current Ipx is controlled to be smaller for a larger effective value of AC voltage Vx, and larger for a smaller effective value of AC voltage Vx.

Active power Px is transmitted from bus bar 22 to bus bar 20 via power transmission line 21. As shown in Fig. 1, power transmission line 21 has a resistance component RL and a reactance component XL. Resistance component RL is smaller than reactance component XL and thus negligible. By advancing the phase of AC voltage Vx on bus bar 22 from the phase of AC voltage Vc on bus bar 20, active power Px can be transmitted from bus bar 22 to bus bar 20 via power transmission line 21.

However, as has been described above, the magnitude of active current Ipx varies with that of AC voltage Vx, and accordingly, transmitting active power Px from PCS 30 to bus bar 20 entails varying the phase difference of AC voltage Vx with respect to AC voltage Vc. Specifically, AC voltage Vx has a phase changed to have a larger phase difference with respect to AC voltage Vc as active current Ipx increases. In contrast, AC voltage Vx has a phase changed to have a smaller phase difference with respect to AC voltage Vc as active current Ipx decreases. That is, AC voltage Vx has a phase varied as active current Ipx varies.

The phase variation of AC voltage Vx is equivalent to changing the frequency of AC voltage Vx, or system frequency f. That is, the phase variation of AC voltage Vx will increase frequency deviation Δf. And when a change in the system frequency exceeding reference value fp (see Fig. 3) is detected, then, by the above-described function of detecting the isolated operation state, PCS 30 injects reactive power Qx in a direction to promote the change of the frequency (an increase or a decrease). The injection of reactive power Qx for detection of isolated operation consequently would expand voltage fluctuation (or flicker) of the power system.

The flicker suppression device described in PTL 1 is configured such that, for the purpose of cancelling reactive power Qx injected from a PCS in response to a change in the system frequency, such a reactive power that compensates for the change in the system frequency is injected into the power system. Thus, PTL 1 contemplates suppression of flicker attributed to a function of the PCS to detect isolated operation.

However, there is a concern that, depending on the magnitude of the phase variation of AC voltage Vx (that is, the magnitude of frequency deviation Δf) attributed to active power control performed for PCS 30, the degree of instability of flicker would increase, and it is difficult to obtain a sufficient suppression effect even by injection of reactive power by the flicker suppression device.

Accordingly, flicker suppression device 100 according to the present embodiment suppresses flicker attributed to active power control performed for PCS 30 by injecting active power Pc (or an active current Ipc) into the power system in response to voltage fluctuation of the power system so as to compensate for variation of active power Px (or active current Ipx) injected from PCS 30.

### <Principle of Operation of Flicker Suppression Device 100>

Initially, a principle of an operation of flicker suppression device 100 according to the first embodiment will be described.

As shown in Fig. 1, bus bar 20 is connected to voltage source 10 via a power transmission line. The power transmission line has a resistance component Rs and a reactance component Xs. When active current Ipx flows from PCS 30 to voltage source 10, a voltage is generated by resistance component Rs. Therefore, as indicated in the figure by a solid arrow, when active current Ipx from PCS 30 varies, AC voltage Vc of the power system also varies.

Flicker suppression device 100 varies active current Ipc output from power converter 110 so as to compensate for variation of active current Ipx output from PCS 30. Specifically, when AC voltage Vc has a reduced effective value and accordingly, active current Ipx increases, flicker suppression device 100 causes power converter 110 to operate to absorb the increase. When this is done, power converter 110 converts active power Pc absorbed from bus bar 20 to DC power and outputs the DC power to power storage element 120. That is, power storage element 120 is charged with active power Pc absorbed by power converter 110 from bus bar 20 as active current Ipx increases.

In contrast, when AC voltage Vc has an increased effective value and accordingly, active current Ipx decreases, flicker suppression device 100 causes power converter 110 to operate to absorb the decrease. When this is done, power converter 110 generates active power Pc from DC power of power storage element 120 and outputs active power Pc to bus bar 20. That is, power storage element 120 is discharged by active power Pc output from power converter 110 to bus bar 20 as active current Ipx decreases.

In this way, flicker suppression device 100 controls active current Ipc output from power converter 110 to bus bar 20 so as to cancel variation in active current Ipx output from PCS 30, as indicated in the figure by an allow of a broken line. That is, power converter 110 injects into bus bar 20 active power Pc controlled to compensate for variation in active current Ipx injected from PCS 30 that is introduced as the system voltage fluctuates.

This cancels variation in active current Ipx output from PCS 30, and can hence suppress phase variation in the AC voltage otherwise attributed to variation in active current Ipx. Suppressing phase variation of the AC voltage in turn suppresses injection of reactive power Qx by the function of PCS 30 to detect the isolated operation state, and can hence suppress expansion of flicker.

### <Configuration of Flicker Suppression Device 100>

A specific configuration of flicker suppression device 100 according to the first embodiment will now be described.

As illustrated in Fig. 1, flicker suppression device 100 comprises power converter 110, power storage element 120, a current detector 132, a voltage detector 134, and control device 130.

Power converter 110 is connected to bus bar 20. Power converter 110 is for example a self-excited converter such as a two-level converter, a three-level converter, or a multi-level converter. Power converter 110 is connected to power storage element 120. Power storage element 120 is for example an energy storage element such as a secondary battery or an electric double layer capacitor.

Power converter 110 performs power conversion between power storage element 120 and bus bar 20. Specifically, power converter 110 receives DC power from power storage element 120, converts the DC power to AC power, and outputs the AC power to bus bar 20. Power converter 110 receives AC power from bus bar 20, converts the AC power to DC power and outputs the DC power to power storage element 120. Thus, power converter 110 electrically charges and discharges power storage element 120.

Current detector 132 detects three-phase AC current Ic flowing between bus bar 20 and power converter 110, and outputs a signal indicating a detection value to control device 130. Voltage detector 134 detects three-phase AC voltage Vc on bus bar 20, and outputs a signal indicating a detection value to control device 130.

Control device 130 controls power conversion performed in power converter 110. Specifically, control device 130 controls active power Pc communicated between power converter 110 and bus bar 20 based on the signals received from current detector 132 and voltage detector 134.

### (Hardware Configuration of Control Device 130)

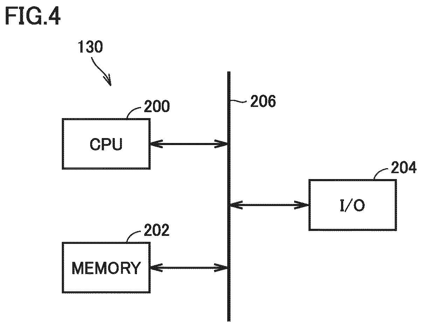

Fig. 4 shows a hardware configuration example of control device 130. Control device 130 can be typically configured by a microcomputer in which a predetermined program is stored in advance.

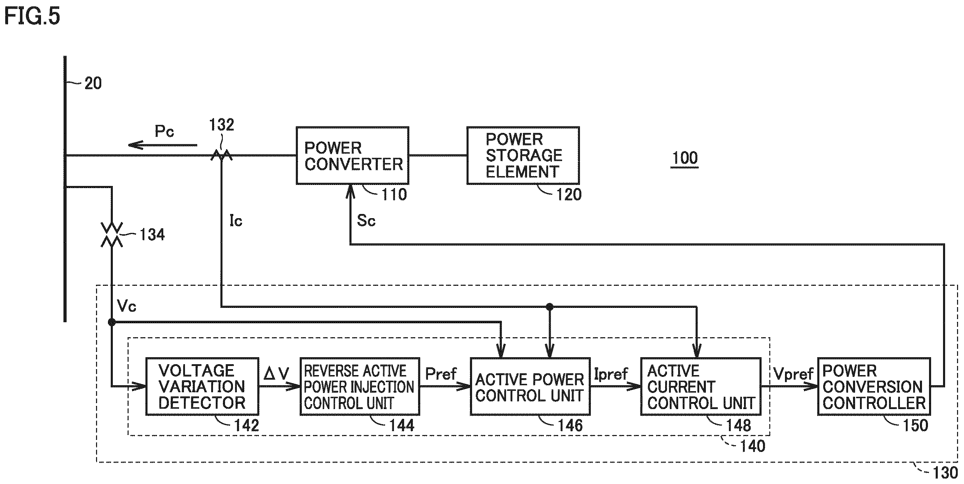

For example, as illustrated in Fig. 4, control device 130 includes a CPU 200, a memory 202, and an input/output (I/O) circuit 204. CPU 200, memory 202, and I/O circuit 204 can communicate data with one another via a bus 206. A program is stored in advance in a partial area of memory 202, and CPU 200 executes the program to implement a function of each unit illustrated in Fig. 5. I/O circuit 204 receives and outputs signals and data from and to an outside of control device 130 (for example, power converter 110, current detector 132, and voltage detector 134.).

Alternatively, unlike the example of Fig. 4, at least a portion of control device 130 can be configured using a circuit such as an FPGA or an ASIC. Further, at least a portion of control device 130 can be configured by an analog circuit.

### (Functional Configuration of Control Device 130)

Fig. 5 is a block diagram for illustrating a functional configuration of control device 130. As illustrated in Fig. 5, control device 130 includes an active power controller 140 that controls active power Px output from power converter 110, and a power conversion controller 150.

Active power controller 140 includes a voltage variation detector 142, a reverse active power injection control unit 144, an active power control unit 146, and an active current control unit 148.

Voltage variation detector 142 uses AC voltage Vc detected by voltage detector 134 to calculate an amount of voltage variation ΔV indicating variation (an increase or a decrease) of an effective value of AC voltage Vc. Specifically, voltage variation detector 142 obtains the current effective value of AC voltage Vc. Then, voltage variation detector 142 calculates amount of voltage variation ΔV by subtracting from the current effective value of AC voltage Vc a reference value (a reference voltage value) set for the effective value of AC voltage Vc as determined through power flow calculation or the like.

In the present embodiment, when AC voltage Vc has an increasing effective value, amount of voltage variation ΔV is calculated to be positive in polarity (ΔV > 0), whereas when AC voltage Vc has a decreasing effective value, amount of voltage variation ΔV is calculated to be negative in polarity (ΔV < 0). How amount of voltage variation ΔV is calculated is not limited to the above-described example. Insofar as an increase or a decrease in the effective value of AC voltage Vc can be represented, amount of voltage variation ΔV can be calculated in any method including a change in the definition for the polarity (positive/negative).

Reverse active power injection control unit 144 performs a predetermined control operation with amount of voltage variation ΔV as an input parameter to calculate an active power command value Pref indicating a target value for active power Pc to be output by power converter 110. Specifically, in response to AC voltage Vc having an increased effective value, active power command value Pref is set so as to increase active current Ipc output from power converter 110 to bus bar 20. On the other hand, in response to AC voltage Vc having a reduced effective value, active power command value Pref is set so as to reduce active current Ipc output from power converter 110 to bus bar 22.

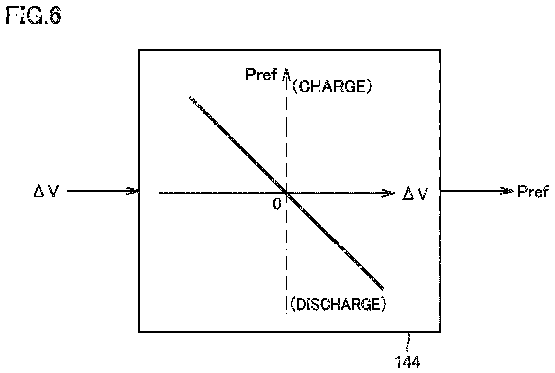

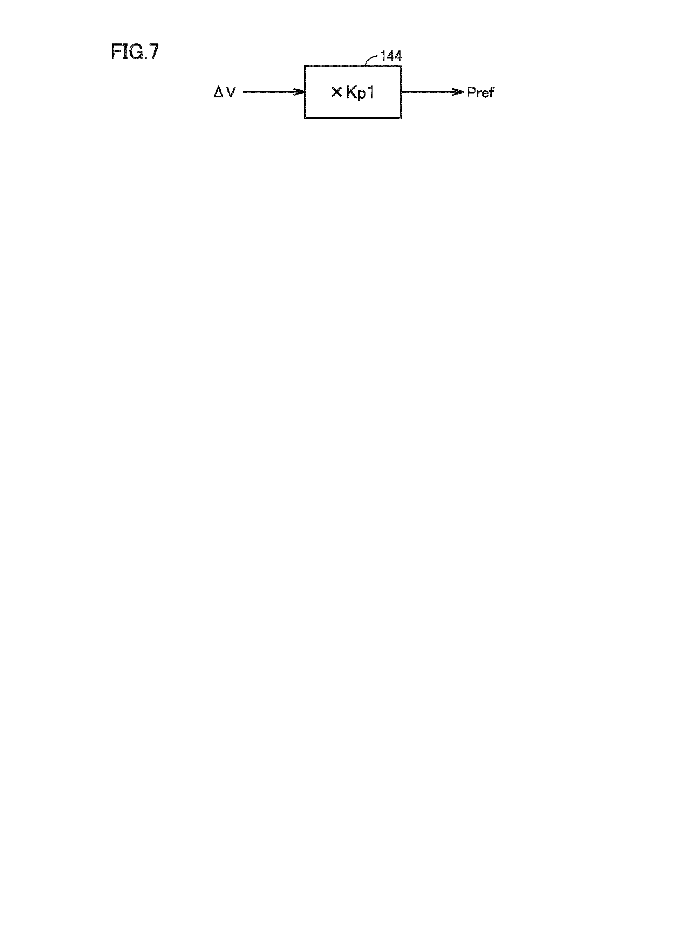

Figs. 6 and 7 show an example of a control operation performed by reverse active power injection control unit 144. In Fig. 6, the horizontal axis represents amount of voltage variation ΔV such that a direction in which voltage increases is a positive direction and a direction in which voltage decreases is a negative direction. In Fig. 6, the vertical axis represents active power command value Pref such that a direction in which electric power (or a current) flows from bus bar 20 into power converter 110 (that is, a direction in which power storage element 120 is charged) is a positive direction. That is, active power command value Pref is represented to have a positive value for power charged to power storage element 120 and a negative value for power discharged therefrom.

As shown in Fig. 7, reverse active power injection control unit 144 can set active power command value Pref by P (proportional) control in accordance with the product of amount of voltage variation ΔV and a proportional gain Kp1 (Pref = Kp1 · ΔV).

For example, as shown in Fig. 6, for amount of voltage variation ΔV > 0, reverse active power injection control unit 144 sets active power command value Pref in a direction to discharge power storage element 120 (Pref < 0). Active power command value Pref is set so that power storage element 120 discharges more power as AC voltage Vc has an increasing effective value. On the other hand, for amount of voltage variation ΔV < 0, active power command value Pref is set in a direction to charge power storage element 120 (Pref > 0). Active power command value Pref is set so that power storage element 120 is charged with more power as AC voltage Vc has a decreasing effective value.

Thus, when AC voltage Vc has an increased effective value (ΔV > 0), PCS 30 outputs a reduced active current Ipx, and in response thereto, active power command value Pref can be set so as to increase active current Ipc injected from power converter 110 to bus bar 20, that is, increase a current discharged from power storage element 120.

In contrast, when AC voltage Vc decreases (ΔV < 0), PCS 30 outputs an increased active current Ipx, and in response thereto, active power command value Pref can be set so as to reduce active current Ipc injected from power converter 110 into bus bar 20, that is, increase a current charged to power storage element 120.

That is, reverse active power injection control unit 144 can set active power command value Pref so as to output active current Ipc that cancels a change in active current Ipx output from PCS 30. Active current Ipc injected is adjusted in magnitude depending on the magnitude of the change in active current Ipx, which can enhance control in stability.

Reverse active power injection control unit 144 can also switch proportional gain Kp1 in magnitude depending on the magnitude of amount of voltage variation ΔV. For example, for a region in which amount of voltage variation ΔV has an absolute value larger than a predetermined reference value, proportional gain Kp1 can be set to k1, whereas for a region in which amount of voltage variation ΔV has an absolute value smaller than the predetermined reference value, proportional gain Kp1 can be set to k2 smaller than k1. Faster, more responsive control can be achieved for a region in which amount of voltage variation ΔV has a large absolute value, and more stable control can be achieved for a region in which amount of voltage variation ΔV has a small absolute value.

Returning to Fig. 5, active power control unit 146 generates an active current command value Ipref for causing active power Pc output from power converter 110 to follow active power command value Pref. Specifically, active power control unit 146 calculates active power Pc output by power converter 110 from AC current Ic detected by current detector 132 and AC voltage Vc detected by voltage detector 134. Active power Pc is given by VIcosϕ. Herein, V is a line voltage of AC voltage Vc, I is a line current of AC current Ic, ϕ is a phase difference between AC voltage Vc and AC current Ic, and cosϕ is a power factor.

Subsequently, active power control unit 146 calculates a deviation ΔPc between active power command value Pref and active power Pc (i.e., Pref - Pc). Active power control unit 146 generates active current command value Ipref through feedback control applied to zero deviation ΔPc. Active power control unit 146 is composed of a PI controller, a PID controller, and the like.

Active current control unit 148 generates an active voltage command value Vpref for causing active current Ipc to follow active current command value Ipref. Specifically, active current control unit 69 calculates active current Ipc by subjecting AC current Ic detected by current detector 132 to three-phase/two-phase conversion in the positive phase coordinate system. And active current control unit 148 calculates a deviation ΔIpc between active current command value Ipref and active current Ipc (i.e., Ipref - Ipc). Active current control unit 148 generates active voltage command value Vpref through feedback control applied to zero deviation ΔIpc. Active current control unit 148 is composed of a PI controller, a PID controller, and the like.

Power conversion controller 150 generates a control command Sc for power converter 110 based on active voltage command value Vpref received from active power controller 140. Specifically, power conversion controller 150 generates a three-phase voltage command value by subjecting active voltage command value Vpref to two-phase/three-phase conversion in the positive phase coordinate system. And power conversion controller 150 generates control command Sc as a PWM signal by subjecting the three-phase voltage command value to pulse width modulation. Control command Sc is typically a gate signal for controlling turning on and off each switching element included in power converter 110. Control command Sc is input to power converter 110.

### (Operation of Flicker Suppression Device 100)

An operation of flicker suppression device 100 according to the first embodiment will now be described.

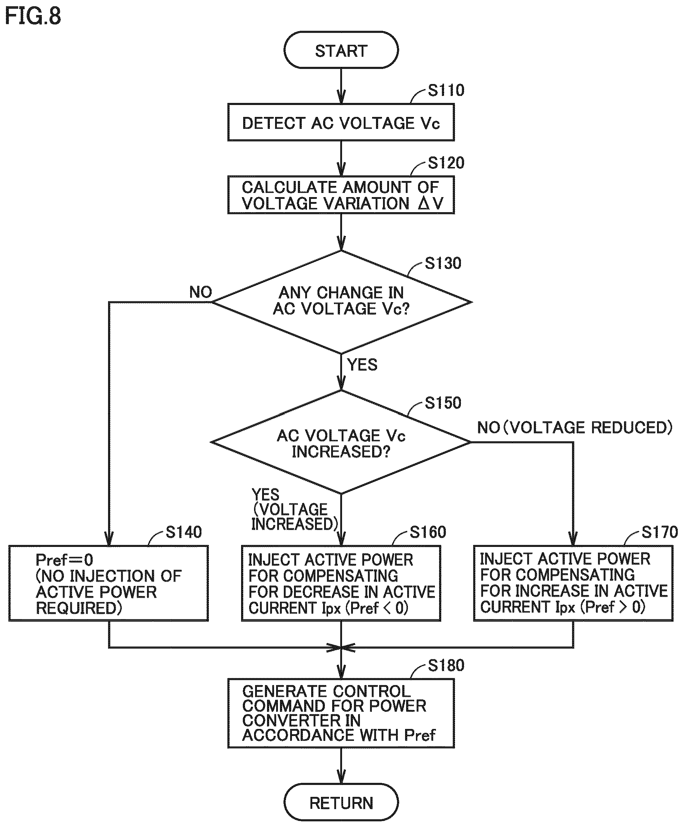

Fig. 8 is a flowchart of a flicker suppression process performed by flicker suppression device 100 according to the first embodiment. The flowchart of Fig. 8 is repeatedly executed by control device 130 periodically as predetermined for control when flicker suppression device 100 is in operation.

As shown in Fig. 8, AC voltage Vc is detected in step (hereinafter simply referred to as "S") 110, and control device 130 uses AC voltage Vc to calculate amount of voltage variation ΔV in step S120. The step of S120 can be implemented by using an output received from voltage detector 134 shown in Fig. 5.

Further, in S130, control device 130 determines whether there is a change in AC voltage Vc in magnitude (or effective value) based on amount of voltage variation ΔV calculated in S120. When there is no change in AC voltage Vc (NO in S130), active power command value Pref is set to 0 in S140. That is, active power command value Pref is set so that power converter 110 does not inject active power (Pc = 0).

When there is a change in AC voltage Vc (YES in S130), control device 130 determines in S150 whether the change in AC voltage Vc is an increase or a decrease. For example, the decision in S150 can be made based on the polarity of amount of voltage variation ΔV.

When responding to an increase in AC voltage Vc (YES in S150), control device 130 proceeds to S160 to perform a predetermined control operation with amount of voltage variation ΔV as an input to set active power command value Pref (Pref < 0) to output active current Ipc for compensating for a decrease in active current Ipx output from PCS 30. On the other hand, when responding to a decrease in AC voltage Vc (NO in S150), control device 130 proceeds to S170 to perform a predetermined control operation with amount of voltage variation ΔV as an input to set active power command value Pref (Pref > 0) to output active current Ipc for compensating for an increase in active current Ipx output from PCS 30.

Further, in S180, control device 130 generates control command Sc for power converter 110 in accordance with active power command value Pref calculated in S140, S160, or S170. When power converter 110 operates in accordance with control command Sc generated in S180, active power Pc following active power command value Pref is injected into bus bar 20. For Pref < 0, power converter 110 receives DC power from power storage element 120, converts the received DC power to AC power and outputs the AC power to bus bar 20 to compensate for a decrease in active current Ipx. On the other hand, for Pref < 0, power converter 110 receives AC power from bus bar 20, converts the received AC power to DC power and outputs the DC power to power storage element 120 to compensate for an increase in DC current Ipx.

Thus, flicker suppression device 100 of the first embodiment controls active current Ipc that is injected from power converter 110 into the power system to compensate for variation in active current Ipx output from PCS 30 that is introduced in response to voltage fluctuation of the power system. This can cancel the variation of active current Ipx output from PCS 30, and can suppress phase variation (or frequency variation) in AC voltage otherwise attributed to the variation of active current Ipx. Suppressing the phase variation of the AC voltage in turn suppresses injection of reactive power Qx done by the function of PCS 30 to detect the isolated operation state, and can hence suppress expansion of flicker. Thus, flicker suppression device 100 according to the first embodiment can suppress flicker attributed to active power control performed for PCS 30.

### Second Embodiment.

In the first embodiment, a configuration has been described in which control device 130 generates active power command value Pref from amount of voltage variation ΔV, and generates active current command value Ipref through feedback control applied to zero deviation ΔPc between active power command value Pref and active power Pc. In a second embodiment, a configuration in which active current command value Ipref is directly generated from amount of voltage variation ΔV will be described.

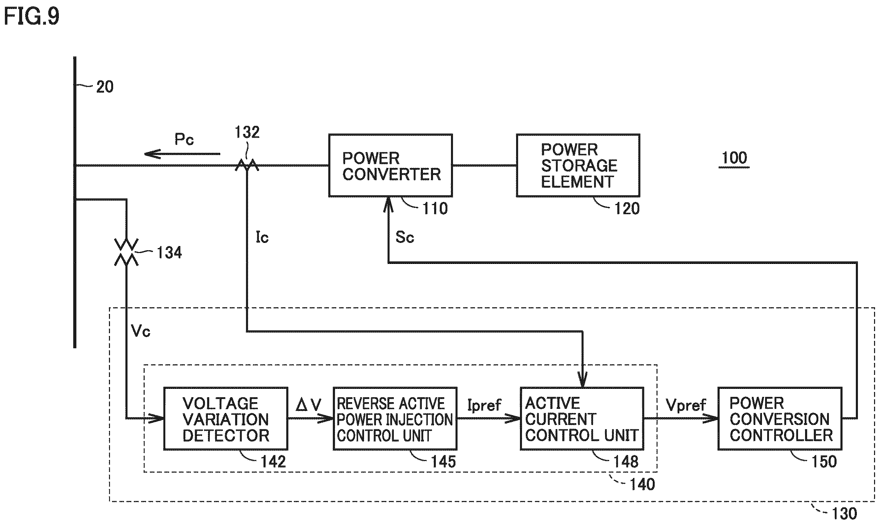

Fig. 9 is a block diagram showing a configuration of flicker suppression device 100 according to the second embodiment. Flicker suppression device 100 according to the second embodiment differs from flicker suppression device 100 according to the first embodiment in how control device 130 is configured.

As shown in Fig. 9, control device 130 includes active power controller 140 and power conversion controller 150. Active power controller 140 is different from active power controller 140 shown in Fig. 5 in that a reverse active power injection control unit 145 is included instead of reverse active power injection control unit 144 and active power control unit 146.

Reverse active power injection control unit 145 performs a predetermined control operation using amount of voltage variation ΔV as an input parameter to calculate active current command value Ipref. Specifically, in response to AC voltage Vc having an increased effective value, active current command value Ipref is set so as to increase active current Ipc output from power converter 110 to bus bar 20. On the other hand, in response to AC voltage Vc having a reduced effective value, active current command value Ipref is set so as to reduce active current Ipc output from power converter 110 to bus bar 22.

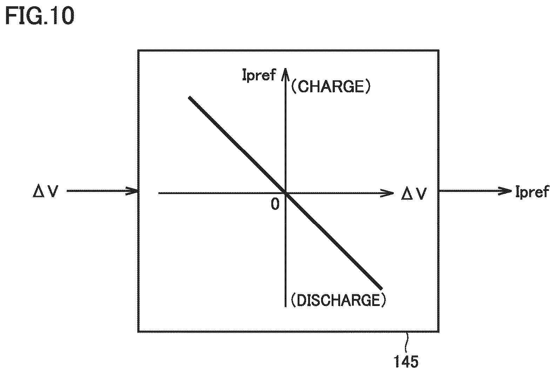

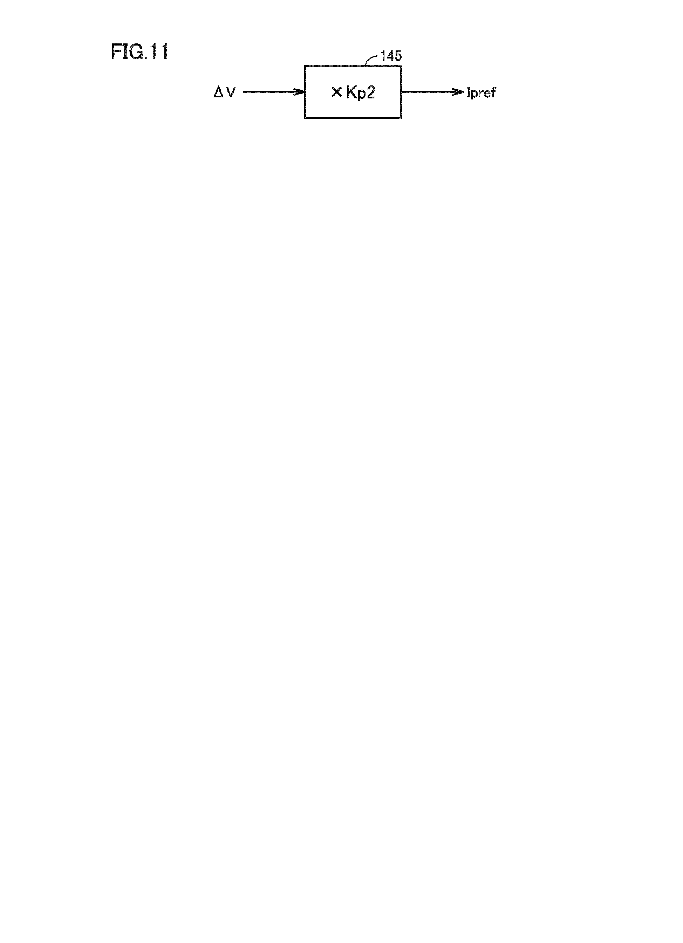

Figs. 10 and 11 show an example of a control operation performed by reverse active power injection control unit 145. In Fig. 10, the horizontal axis represents amount of voltage variation ΔV such that a direction in which voltage increases is a positive direction and a direction in which voltage decreases is a negative direction. In Fig. 10, the vertical axis represents active current command value Ipref such that a direction in which a current flows from bus bar 20 into power converter 110 (i.e., a direction in which power storage element 120 is charged) is positive. That is, active current command value Ipref is represented such that a current charged to power storage element 120 has a positive value and a current discharged therefrom has a negative value.

As shown in Fig. 11, reverse active power injection control unit 145 can set active current command value Pref by P control in accordance with a product of amount of voltage variation ΔV and a proportional gain Kp2 (Ipref = Kp2 · ΔV).

For example, as illustrated in Fig. 10, for amount of voltage variation ΔV > 0, reverse active power injection control unit 145 sets active current command value Ipref in a direction to discharge power storage element 120 (Ipref < 0). Active current command value Ipref is set so that power storage element 120 discharges a larger current as AC voltage Vc has an increasing effective value. On the other hand, for amount of voltage variation ΔV < 0, active current command value Ipref is set in a direction to charge power storage element 120 (Ipref > 0). Active current command value Ipref is set so that power storage element 120 is charged with a larger current as AC voltage Vc has a decreasing effective value.

Thus, when AC voltage Vc has an increased effective value (ΔV > 0), PCS 30 outputs a reduced active current Ipx, and in response thereto, active current command value Ipref can be set (so as to increase a current discharged from power storage element 120) so as to increase active current Ipc injected from power converter 110 to bus bar 20. In contrast, when AC voltage Vc decreases (ΔV < 0), PCS 30 outputs an increased active current Ipx, and in response thereto, active current command value Ipref can be set (so as to increase a current charged to power storage element 120) so as to reduce active current Ipc injected from power converter 110 into bus bar 20.

Note that reverse active power injection control unit 145 can also switch proportional gain Kp2 in magnitude depending on the magnitude of amount of voltage variation ΔV in the same method as reverse active power injection control unit 144. That is, proportional gain Kp2 can be set to k3 for a region in which amount of voltage variation ΔV has an absolute value larger than a predetermined threshold value, and proportional gain Kp2 can be set to k4 smaller than k3 for a region in which amount of voltage variation ΔV has an absolute value smaller than the threshold value.

Active current control unit 148 generates active voltage command value Vpref for causing active current Ipc to follow active current command value Ipref. Power conversion controller 150 generates control command Sc for power converter 110 based on active voltage command value Vpref received from active power controller 140.

As described above, flicker suppression device 100 of the second embodiment configured to generate active current command value Ipref directly from amount of voltage variation ΔV can dispense with the feedback control performed for causing active power Pc output from power converter 110 to follow active power command value Pref. This allows a further faster, more responsive control than flicker suppression device 100 according to the first embodiment. This can in turn more rapidly suppress flicker attributed to the active power control performed for PCS 30.

### Third Embodiment.

In the first embodiment, a configuration in which active power Pc output from power converter 110 is controlled in response to voltage fluctuation of a power system has been described. In a third embodiment, a configuration will be described in which, in parallel with controlling active power Pc, reactive power Qc output from power converter 110 is controlled in response to variation in the system frequency.

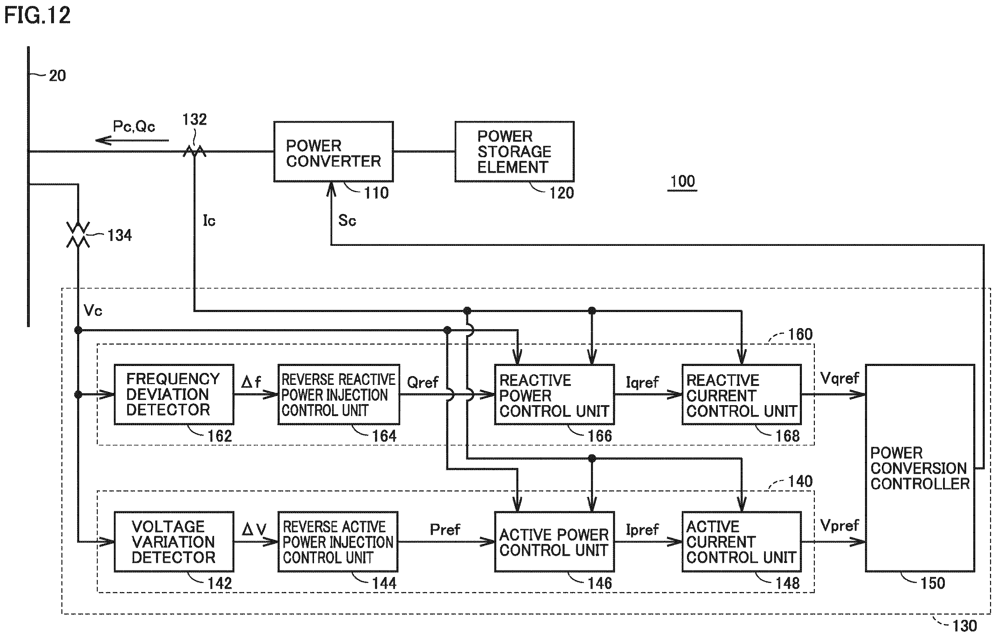

Fig. 12 is a block diagram showing a configuration of flicker suppression device 100 according to the third embodiment. Flicker suppression device 100 according to the third embodiment differs from flicker suppression device 100 according to the first embodiment in how control device 130 is configured.

As shown in Fig. 12, control device 130 includes active power controller 140, a reactive power controller 160, and power conversion controller 150. Control device 130 is different from control device 130 shown in Fig. 5 in that the former includes reactive power controller 160 that controls reactive power Qx output from PCS 30.

Reactive power controller 160 includes a frequency deviation detector 162, a reverse reactive power injection control unit 164, a reactive power control unit 166, and a reactive current control unit 168.

Frequency deviation detector 162 is the same as frequency deviation detector 72 in reactive power controller 70 that controls reactive power Qx output from PCS 30, as shown in Fig. 2. That is, frequency deviation detector 162 detects from AC voltage Vc detected by voltage detector 134 the voltage's frequency, or system frequency f. Frequency deviation detector 162 then calculates frequency deviation Δf using the detected system frequency f.

Reverse reactive power injection control unit 164 receives frequency deviation Δf and sets a reactive power command value Qref so as to compensate for the received frequency deviation. That is, in response to an increase in system frequency f, reverse reactive power injection control unit 164 sets reactive power command value Qref so as to output a leading reactive power for reducing the frequency (Qref > 0). On the other hand, in response to a decrease in system frequency f, reverse reactive power injection control unit 164 sets reactive power command value Qref so as to output a lagging reactive power for increasing the frequency (Qref < 0).

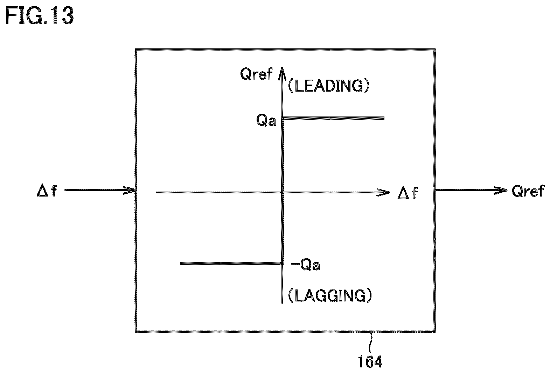

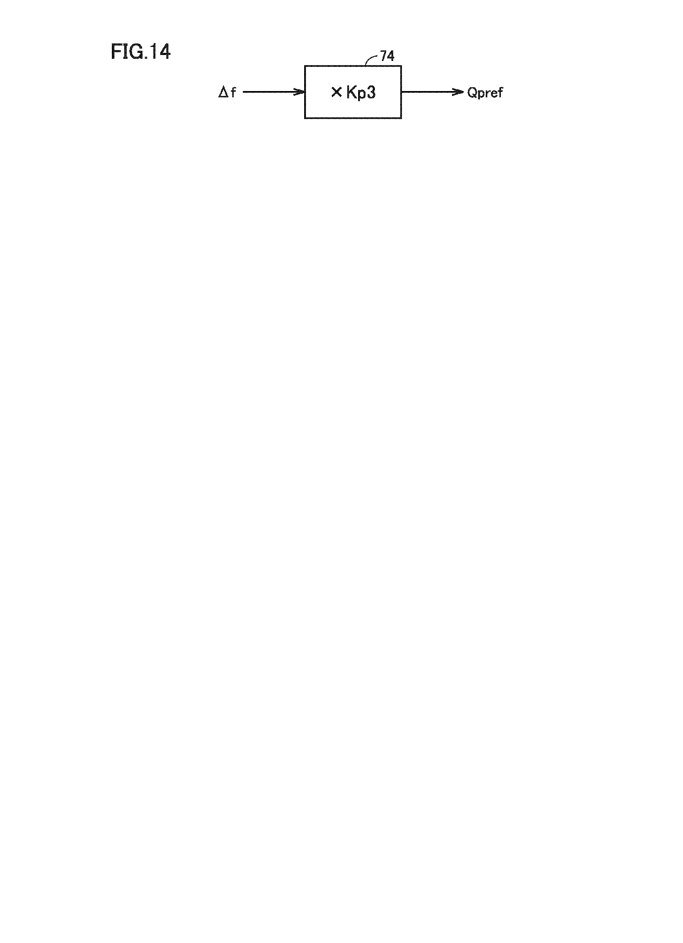

Figs. 13 and 14 show an example of a control operation performed by reverse reactive power injection control unit 164. For example, as shown in Fig. 13, reverse reactive power injection control unit 164 can set Qref = Qa (Qref > 0) for Δf > 0 and Qref = - Qa (Qref < 0) for Δf < 0.

Thus, when system frequency f increases (Δf > 0), reactive power command value Qref for power converter 110 can be set so as to inject leading reactive power Qa in a determined amount into bus bar 20 until system frequency f decreases. In contrast, when system frequency f decreases (Δf < 0), reactive power command value Qref is set so as to inject lagging reactive power - Qa in a determined amount into bus bar 20 until system frequency f increases.

It is also possible to modify Fig. 13 so as to provide a dead band in a region in which frequency deviation Δf has an absolute value smaller than a reference value. Alternatively, as shown in Fig. 14, reverse reactive power injection control unit 164 can set reactive power command value Qref by P control in accordance with a product of frequency deviation Δf and a proportional gain Kp3 (Qref = Kp3 · Δf). Even through the P control, frequency deviation Δf and reactive power command value Qref have a relationship similar to Fig. 13 in polarity. It is understood that in response to an increase in system frequency f (Δf > 0), reactive power command value Qref is set (Qref > 0) so that a leading reactive power is injected into bus bar 20, and in response to a decrease in system frequency f (Δf < 0), reactive power command value Qref is set (Qref < 0) so that a lagging reactive power is injected into bus bar 20. Further, reactive power injected is adjusted in magnitude depending on the magnitude of a change in the frequency, and more stable control can be achieved.

Returning to Fig. 12, reactive power control unit 166 generates reactive current command value Iqref for causing reactive power Qc output from power converter 110 to follow reactive power command value Qref. Specifically, reactive power control unit 76 calculates reactive power Qc output by power converter 110 from AC current Ic detected by current detector 132 and AC voltage Vc detected by voltage detector 134. Reactive power Qc is given by - VIsinϕ. Note that V is a line voltage of AC voltage Vc, I is a line current of AC current Ic, and ϕ is a phase difference between AC voltage Vc and AC current Ic.

Reactive power control unit 166 calculates a deviation ΔQc between reactive power command value Qref and reactive power Qc (i.e., Qref - Qc). Reactive power control unit 166 generates a command value for a reactive current Iqc output from power converter 110, or reactive current command value Iqref, through feedback control applied to zero deviation ΔQc. Reactive power control unit 166 is composed of a PI controller, a PID controller, and the like.

Reactive current control unit 168 generates a reactive voltage command value Vqref for causing reactive current Iqc to follow reactive current command value Iqref. Specifically, reactive current control unit 168 calculates reactive current Iqc by subjecting AC current Ic detected by current detector 132 to three-phase/two-phase conversion in the positive phase coordinate system. And reactive current control unit 168 calculates a deviation ΔIqc between reactive current command value Iqref and reactive current Iqc (i.e., Iqref - Iqc), and generates reactive voltage command value Vqref through feedback control applied to zero deviation ΔIqc. Reactive current control unit 168 is composed of a PI controller, a PID controller, and the like.

Power conversion controller 150 generates control command Sc for power converter 110 based on active voltage command value Vpref received from active power controller 140 and reactive voltage command value Vqref received from reactive power controller 160. Specifically, power conversion controller 150 generates a three-phase voltage command value by subjecting active voltage command value Vpref and reactive voltage command value Vqref to two-phase/three-phase conversion in the positive phase coordinate system. Power conversion controller 150 generates control command Sc as a PWM signal by subjecting the three-phase voltage command value to pulse width modulation. Control command Sc is input to power converter 110.

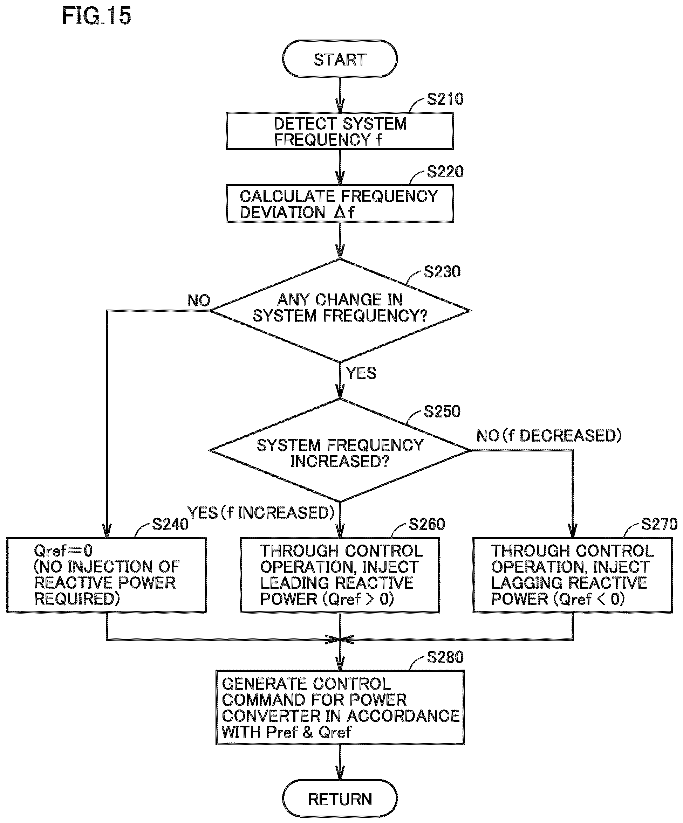

Fig. 15 is a flowchart of a flicker suppression process performed by flicker suppression device 100 according to the third embodiment. The flowchart of Fig. 15 is repeatedly executed by control device 130 periodically as predetermined for control in parallel with the flowchart of Fig. 8 when flicker suppression device 100 operates.

As indicated in Fig. 15, system frequency f is detected in S210, and control device 130 uses system frequency f to calculate frequency deviation Δf in S220. The step of S220 can be implemented by using an output received from voltage detector 134 shown in Fig. 12.

Further, in S230, control device 130 determines whether there is a change in system frequency f based on frequency deviation Δf calculated in S220. When there is no change in system frequency f (NO in S230), reactive power command value Qref = 0 is set in S240. That is, reactive power command value Qref is set so that power converter 110 does not inject reactive power (Qc = 0).

When there is a change in system frequency f (YES in S230), control device 130 determines in S250 whether the change in system frequency f is an increase or a decrease. For example, the decision in S250 can be made based on the polarity of frequency deviation Δf.

When responding to an increase in system frequency f (YES in S250), control device 130 proceeds to S260 to perform a predetermined control operation with frequency deviation Δf as an input to set reactive power command value Qref (Qref > 0) to inject a leading reactive power for compensating for the increase of the frequency. On the other hand, when responding to a decrease in system frequency f (NO in S250), control device 130 proceeds to S270 to perform a predetermined control operation with frequency deviation Δf as an input to set reactive power command value Qref (Qref < 0) to inject a lagging reactive power for compensating for the decrease of the frequency.

Further, in S280, control device 130 generates control command Sc for power converter 110 in accordance with reactive power command value Qref calculated in S240, S260 or S270 and active power command value Pref calculated in S180 of the flowchart of Fig. 5. Power converter 110 operates in response to control command Sc generated in S280, and active power Pc following active power command value Pref and reactive power Qc following reactive power command value Qref are injected into bus bar 20.

Thus, flicker suppression device 100 according to the third embodiment controls active power Pc injected from power converter 110 to a power system so as to compensate for variation in active current Ipx output from PCS 30 that is introduced in response to voltage fluctuation of the power system, and reactive power Qc injected from power converter 110 to the power system so as to compensate for a change in a system frequency attributed to reactive power Qx output from PCS 30 as affected by variation in active current Ipx. This allows flicker attributed to the active power control performed for PCS 30 to be suppressed more rapidly.

It should be understood that the embodiments disclosed herein are illustrative and non-restrictive in any respect. The present disclosure is defined by the claims rather than the foregoing description, and is intended to encompass any modification within the meaning and scope equivalent to the terms of the claims.

### REFERENCE SIGNS LIST

10 voltage source, 20, 22 bus bar, 21 power transmission line, 30 PCS, 40 distributed power source, 50, 130 control device, 52, 132 current detector, 54, 134 voltage detector, 60, 140 active power controller, 61 active power limit value generation unit, 63, 146 active power control unit, 65 voltage FF unit, 67 adder, 69, 148 active current control unit, 70, 160 reactive power controller, 72, 162 frequency deviation detector, 74 reactive power injection control unit, 76, 166 reactive power control unit, 78, 168 reactive current control unit, 80 PCS controller, 100 flicker suppression device, 110 power converter, 120 power storage element, 142 voltage variation detector, 144, 145 reverse active power injection control unit, 150 power conversion controller, 164 reverse reactive power injection control unit, 200 CPU, 201 memory, 202 I/O circuit, 206 bus.

## Claims

1. A flicker suppression device for a power system with a power conditioner connected thereto for system interconnection of a distributed power source, comprising:
a power converter to perform power conversion between a power storage element and the power system;
a voltage detector to detect an AC voltage on the power system; and
a control device to control an output of the power converter, based on the detected AC voltage, wherein
the control device operates in response to an increase in an effective value of the AC voltage to control the power converter to convert a DC power output from the power storage element to an AC power and output the AC power to the power system, and the control device operates in response to a decrease in the effective value of the AC voltage to control the power converter to convert an AC power received from the power system to a DC power and output the DC power to the power storage element.

2. The flicker suppression device according to claim 1, wherein
the control device includes
a voltage variation detector to detect an amount of variation of the effective value of the AC voltage,
an active power controller to generate, through a predetermined control operation with the amount of variation as an input, an active power command value to be output from the power converter to the power system, and
a power conversion controller to generate a control command for the power converter to output an active power following the active power command value, and
the active power controller operates in response to the increase in the effective value of the AC voltage to generate the active power command value to compensate for a decrease in an active current output by the power conditioner, and the active power controller operates in response to the decrease in the effective value of the AC voltage to generate the active power command value to compensate for an increase in the active current output by the power conditioner.

3. The flicker suppression device according to claim 2, wherein the active power controller generates the active power command value by the control operation in accordance with a product of a predetermined proportional gain and the amount of variation such that a magnitude of the active power is proportional to an absolute value of the amount of variation.

4. The flicker suppression device according to claim 1, wherein
the control device includes
a voltage variation detector to detect an amount of variation of the effective value of the AC voltage,
an active power controller to generate, through a predetermined control operation with the amount of variation as an input, an active current command value to be output from the power converter to the power system, and
a power conversion controller to generate a control command for the power converter to output an active current following the active current command value, and
the active power controller operates in response to the increase in the effective value of the AC voltage to generate the active current command value to compensate for a decrease in an active current output by the power conditioner, and the active power controller operates in response to the decrease in the effective value of the AC voltage to generate the active current command value to compensate for an increase in the active current output by the power conditioner.

5. The flicker suppression device according to claim 4, wherein the active power controller generates the active current command value by the control operation in accordance with a product of a predetermined proportional gain and the amount of variation such that a magnitude of the active current is proportional to an absolute value of the amount of variation.

6. The flicker suppression device according to claim 2 or 4, wherein
the control device further includes
a frequency deviation detector to detect based on the detected AC voltage a frequency deviation representing an amount of change in a system frequency, which is a frequency of the AC voltage, and
a reactive power controller to generate, through a predetermined control operation with the frequency deviation as an input, a reactive power command value to be output from the power converter to the power system,
the reactive power controller operates in response to an increase in the system frequency to generate the reactive power command value to output a leading reactive power for compensating for the frequency deviation, and the reactive power controller operates in response to a decrease in the system frequency to generate the reactive power command value to output a lagging reactive power for compensating for the frequency deviation, and
the power conversion controller generates the control command to output an active power following the active power command value and a reactive power following the reactive power command value.

7. A flicker suppression control method for a power system with a power conditioner connected thereto for system interconnection of a distributed power source, comprising:
detecting an AC voltage on the power system; and
controlling based on the detected AC voltage an output of a power converter that performs power conversion between a power storage element and the power system, wherein
in the controlling, the power converter is controlled in response to an increase in an effective value of the AC voltage to convert a DC power output from the power storage element to an AC power and output the AC power to the power system, and the power converter is controlled in response to a decrease in the effective value of the AC voltage to convert an AC power received from the power system to a DC power and output the DC power to the power storage element.

8. The flicker suppression control method according to claim 7, wherein
the controlling includes
detecting an amount of variation of the effective value of the AC voltage,
generating, though a predetermined control operation with the amount of variation as an input, an active power command value to be output from the power converter to the power system, and
generating a control command for the power converter to output an active power following the active power command value, and
the generating the active power command value includes
in response to the increase in the effective value of the AC voltage, generating the active power command value to compensate for a decrease in an active current output by the power conditioner, and
in response to the decrease in the effective value of the AC voltage, generating the active power command value to compensate for an increase in the active current output by the power conditioner.

9. The flicker suppression control method according to claim 7, wherein
the controlling includes
detecting an amount of variation of the effective value of the AC voltage,
generating, through a predetermined control operation with the amount of variation as an input, an active current command value to be output from the power converter to the power system, and
generating a control command for the power converter to output an active current following the active power command value, and
the generating the active current command value includes
in response to the increase in the effective value of the AC voltage, generating the active current command value to compensate for a decrease in an active current output by the power conditioner, and
in response to the decrease in the effective value of the AC voltage, generating the active current command value to compensate for an increase in the active current output by the power conditioner.

10. The flicker suppression control method according to claim 8 or 9, wherein
the controlling further includes
detecting based on the detected AC voltage a frequency deviation representing an amount of change in a system frequency, which is a frequency of the AC voltage, and
generating, through a predetermined control operation with the frequency deviation as an input, a reactive power command value to be output from the power converter to the power system,
the generating the reactive power command value includes
in response to an increase in the system frequency, generating the reactive power command value to output a leading reactive power for compensating for the frequency deviation, and
in response to a decrease in the system frequency, generating the reactive power command value to output a lagging reactive power for compensating for the frequency deviation, and
the generating the control command includes generating the control command to output an active power following the active power command value and a reactive power following the reactive power command value.
